# FASCICULE DE BREVET EUROPEEN

(11) **EP 1 082 674 B1**
(45) Date de publication et mention de la délivrance du brevet: **16.12.2009**
(21) Numéro de dépôt: 99947535.3
(22) Date de dépôt: 11.10.1999
(51) Int. Cl.: G06F 17/30

(54) **PROCEDE DE PRECONDITIONNEMENT ET DE CODAGE D'UNE TABLE DE DONNEES, ET PROCEDE DE MISE EN OEUVRE DE REQUETES TABULAIRES SUR UN PROCESSEUR VECTORIEL**
VERFAHREN ZUR VORBEHANDLUNG UND KODIERUNG EINER DATENTABELLE, UND VERFAHREN ZUR IMPLEMENTIERUNG VON TABELLENANFRAGEN AUF EINEM VEKTORPROZESSOR
METHOD FOR PRECONDITIONING AND ENCODING A DATA TABLE AND METHOD FOR THE IMPLEMENTATION OF TABLE REQUESTS ON A VECTORAL PROCESSOR

(30) Priorité: 02.04.1999 FR 9904130
(43) Date de publication de la demande: 14.03.2001
(73) Titulaire: Bull SAS, 78340 Les Clayes-sous-Bois (FR)
(72) Inventeur: NIVELET, Bernard, F-78310 Maurepas (FR)
(74) Mandataire: Pellegrini, Marie Claude
(86) Numéro de dépôt international: PCT/FR1999/002441
(87) Numéro de publication internationale: WO 2000/060498

(56) Documents cités:
- US-A- 4 644 471
- SHUN'ICHI TORII ET AL: "ACCELERATING NON-NUMERICAL PROCESSING BY AN EXTENDED VECTOR PROCESSOR" PROCEEDINGS OF THE INTERNATIONAL CONFERENCE ON DATA ENGINEERING,US,WASHINGTON, IEEE COMP. SOC. PRESS, vol. CONF. 4, 1 juillet 1988 (1988-07-01), page 194-201 XP000124091
- KOJIMA K ET AL: "A RELATIONAL DATABASE SYSTEM ARCHITECTURE BASED ON A VECTOR PROCESSING METHOD" PROCEEDINGS OF THE INTERNATIONAL CONFERENCE ON DATA ENGINEERING,US,WASHINGTON, IEEE COMP. SOC. PRESS, vol. CONF. 3, 1987, page 182-189 XP000757760
- ANONYMOUS: "Query Processing With Existing Vector Feature Machines" IBM TECHNICAL DISCLOSURE BULLETIN, vol. 32, no. 5A, octobre 1989 (1989-10), pages 305-306, XP002124414 New York, US
- COCKSHOTT W.P. ET AL: 'Data compression in database systems' DATABASE AND EXPERT SYSTEMS APPLICATIONS, 1998. PROCEEDINGS. NINTH INTERNATIONAL WORKSHOP ON VIENNA, AUSTRIA 26-28 AUG. 1998 26 Août 1998, pages 981 - 990, XP010296751 ISBN: 0-8186-8353-8

## Description

La présente invention concerne un procédé de préconditionnement d'une table de données destinée à être utilisé par un moteur de recherche répondant à des requêtes de sélection d'articles sur des critères déterminés.

Elle concerne également un procédé de recherche d'articles, en réponse à une requête déterminée, dans une table de données et un moteur de recherche agissant sur une table de données contenant un ensemble d'articles cible, activé par des requêtes de sélection d'articles sur des critères déterminés.

Le domaine d'application est celui de l'entrepôt de données plus connu sous la terminologie anglo-saxonne de "data warehousing". Il s'adresse plus particulièrement à de grandes bases de données historiques, relativement stables dans le temps à partir desquelles on veut pouvoir extraire des populations définies par critères avec une sollicitation très fréquente et des temps de réponse les plus faibles possibles.

Typiquement ces bases peuvent contenir plusieurs millions d'articles pouvant comporter chacun plusieurs centaines de champs et les temps de réponse à des requêtes standards peuvent être longs alors que l'utilisateur souhaiterait qu'ils soient de l'ordre de la seconde. Elles sont mises à jour périodiquement, au plus chaque nuit.

Les clients potentiels de ce type de bases sont par exemple, la grande distribution, les banques et les assurances.

La grande distribution manipule des bases historiques des caisses et des cartes d'achat pour rechercher des populations cible pour le marketing direct. Les banques et les assurances manipulent également de telles bases historiques relatives à des ordres client, pour des recherches de populations, clientes potentielles de nouveaux produits, etc.

On connaît des solutions reposant sur la mise en oeuvre du parallélisme pour l'extraction d'articles sur unités de stockage.

Toutes les solutions connues utilisent un mécanisme de gestion de bases de données relationnelles mises à jour et consultées depuis un environnement réseau. Ce mécanisme est connu sous l'acronyme RDBMS (Relational DataBase Management System).

Dans un premier type de solution, un moteur de recherche SQL (Search Query Language), complètement propriétaire, est construit sur une architecture hautement parallèle à base de noeuds multiprocesseurs pilotant des disques sur lesquels la base de données est répartie. Les requêtes sont fractionnées sur les différents noeuds, puis sur les processeurs.

Cette solution a comme principal inconvénient d'avoir un apport prix/performance qui reste élevé, Ainsi, pour atteindre de hautes performances, les configurations doivent être importantes, donc très coûteuses.

Un deuxième type de solutions utilise des logiciels de bases de données relationnelles standards sur des machines standards généralement multiprocesseurs.

Dans ce deuxième type de solutions, un moteur de recherche SQL standard met en oeuvre le parallélisme élevé suivant les mêmes principes que les solutions du premier type mais avec des variantes d'architecture sur les mécanismes de fractionnement des requêtes et sur la gestion des antémémoires.

Les inconvénients de ce deuxième type de solutions sont les mêmes que ceux du premier type, aggravés d'une perte de performance due à la lourdeur du logiciel qui est une conséquence de sa généralité.

Le document ANONYMOUS : « Query Processing With Existing Vector Feature Machines » IBM TECHNICAL DISCLOSURE BULLETIN, vol. 32, N° 5A, October 1989 (1989-10), pages 305-306, XP002124414, New York, US, décrit un modèle de remplacement de tableaux relationnels consistant en une pluralité de tableaux de chaîne de caractères à une colonne, associés chacun à un tableau d'entiers à une colonne. Ces entiers sont notamment des pointeurs sur une position dans le tableau de chaîne de caractères à une colonne. Cependant ce type de représentation de tableaux de données nécessite un éclatement des tableaux à plusieurs colonnes en plusieurs tableaux à une colonne, associé chacun à un deuxième tableau de pointeurs à une colonne. L'espace mémoire requis est donc plus important et plus difficile à gérer.

Le document SHUN'ICHI TORII ET AL: « ACCELERATING NON-NUMERICAL PROCESSING BY EXTENDED VECTOR PROCESSOR », PROCEEDINGS OF THE INTERNATIONAL CONFERENCE ON DATA ENGINEERING, US, WASHINGTON, IEEE COMP. SOC. PRESS, vol. CONF. 4, 1 July 1988 (1988-07-01), enseigne l'utilisation de processeurs vectoriels pour différentes applications comme les requêtes relationnelles complexes utilisant des indexes multiples. Ce document enseigne notamment un traitement de requêtes de sélection par un processeur vectoriel réalisant, par exemple, des opérations de sélection. Cependant ce document nécessite une modification de la structure matérielle des moyens de traitement, cette modification impliquant d'une part une plus grande complexité du système de traitement de bases données relationnelles et d'autre part une augmentation des coûts de fabrication.

L'invention a notamment pour but de pallier ces inconvénients en fournissant un moteur de recherche assez puissant pour effectuer dans des délais très courts, de l'ordre de quelques secondes, sur des tables de données de grande dimension mais stables dans le temps (mises à jour périodiques, au plus chaque nuit), des requêtes de sélection d'articles sur critères.

A cet effet, l'invention a pour premier objet un procédé de de pré-conditionnement d'une ou plusieurs premières tables de données d'un serveur applicatif décisionnel dans un système de recherche, les premières tables étant destinèes à être traitées par un moteur de recherche répondant à des requêtes de sélection d'articles dans les premières tables de données, émises par le serveur applicatif décisionnel, caractérisé en ce qu'il comprend :
- Une étape d'analyse de prédicats contenus dans les champs des articles destinés à remplir la ou les dites premières tables de données, les prédicats comprenant des mots, l'analyse des prédicats dans les articles étant réalisée selon les relations autorisées et des contraintes déterminées sur les prédicats, les contraintes sur les prédicats comprenant une relation ordinale entre les mots;
- Une étape de création d'une nomenclature des prédicats à partir de et subséquente à l'analyse des prédicats des articles;
- Une étape de codage numérique des prédicats, à partir de et subséquente à l'analyse des prédicats des articles, conformément à la nomenclature, le codage conservant la relation ordinale entre les mots des prédicats;
- en ce qu'il consiste à présenter les prédicats codés, sous la forme d'au moins une seconde table de valeurs numériques, cette seconde table étant copiée dans une machine avec des capacités vectorielles opérant le traitement des valeurs numériques sur la deuxième table.

L'invention a pour deuxième objet un procédé de recherche d'articles, dans au moins une première table de données, en réponse à une requête déterminée provenant d'un serveur applicatif, une deuxième table de valeurs numériques codées étant obtenue à partir de la première table par le procédé de préconditionnement, caractérisé en ce qu'il comprend :
- une étape de réception d'une requête comprenant des prédicats, comprenant des mots suivant une relation ordinale, destinés à la recherche d'articles dans la première table,
- une étape de transformation de la requête en une requête encodée comprenant des prédicats encodés numériquement,
- une étape de traitement de la requête encodée en liaison avec la seconde table de valeurs numériques.

Enfin elle a pour troisième objet un système de recherche mis en oeuvre par un serveur applicatif décisionnel comportant une base de données relationnelle contenant un ensemble d'articles cible, et un moteur de recherche couplé au serveur applicatif décisionnel, activé par une requête de sélection d'articles sur des critères déterminés émise par le serveur applicatif décisionnel, caractérisé en ce que le moteur comporte des moyens de pré-conditionnement de données de la base et d'installation d'une table codée, correspondant à la base, sur une machine à capacités vectorielles, ces moyens comportant :
- des moyens de lecture d'un fichier de données correspondant à la base;
- des moyens pour constituer une nomenclature des valeurs des champs contenus dans le fichier
- des moyens de codage des champs conformément à la nomenclature en tenant compte de la nature des champs, des relations à mettre en oeuvre sur les prédicats dans la requête et de contraintes sur des prédicats dans les champs, les contraintes comprenant une relation ordinale sur les prédicats, conservée par le codage;
- des moyens d'analyse des requêtes émises par le serveur applicatif décisionnel, en tenant compte de relations autorisées, des contraintes sur les prédicats et de la nomenclature ; et
- des moyens de codage de la requête analysée, en un ensemble de vecteurs contenant les valeurs à trouver dans les champs selon les relations associées, sous forme d'un fichier d'entrée exploitable par la machine à capacités vectorielles.

Le système comporte en outre des moyens pour extraire en clair les données recherchées dans le fichier résultat obtenu en sortie de la machine à capacités vectorielle à partir de moyens de recherche installés dans la serveur applicatif décisionnel.

Des synthèses statistiques peuvent être en outre opérées sur les résultats de la recherche. L'invention a notamment pour avantage de fournir des temps de réponse très courts, inaccessibles par les techniques RDBMS, et un débit de requêtes élevé.

Elle a pour autres avantages d'être transparente pour l'application existante et de n'avoir aucun impact au niveau applicatif.

D'autres avantages et caractéristiques de la présente invention apparaîtront à la lecture de la description qui suit faite en référence aux figures annexées qui représentent :
- la figure 1, un schéma de principe d'un système de recherche mettant en oeuvre un moteur de recherche selon l'invention;
- la figure 2, un schéma de principe d'un module de préconditionnement et d'installation de la base de données, selon l'invention ; et
- la figure 3, un schéma de principe d'un agent SELECT selon l'invention.

Dans ces figures, les éléments homologues sont désignés par les mêmes références numériques.

Le principe de l'invention est décrit ci-après en s'appuyant pour son illustration, sur l'utilisation d'une machine vectorielle connue sous l'appellation de supercalculateur.

Une telle machine est caractérisée, d'une part, par des processeurs possédant plusieurs unités arithmétiques, "pipelines" en terminologie anglo-saxonne et, d'autre part, par une bande passante mémoire suffisante pour assurer l'alimentation de tous les processeurs à chaque top d'horloge.

L'invention n'est cependant pas limitée à ce type de machine et s'applique à toute machine à capacités vectorielles, c'est-à-dire des machines dont les performances se rapprochent de celles des supercalculateurs vectoriels.

En effet, les calculateurs scalaires actuels comportent plusieurs opérateurs arithmétiques et les bandes passantes mémoire progressent grâce à l'usage d'une technologie, connue sous la terminologie anglo-saxonne "crossbar" (autocommutateur). On peut donc envisager dans un avenir proche que les performances des calculateurs scalaires se rapprochent de celles des supercalculateurs vectoriels.

Les supercalculateurs vectoriels offrent dès maintenant une réponse aux demandes toujours grandissantes de performances dans les domaines des sciences et de l'industrie en général.

Les machines vectorielles sont aujourd'hui les seules à pouvoir répondre aux contraintes déjà exprimées dans le préambule de la présente description. L'idée de base de l'invention est de tirer parti de la puissance exceptionnelle des machines à capacités vectorielles pour effectuer des comparaisons sur les vecteurs numériques, images codées des champs de la table de données.

La transformation en nombres des données de la table à traiter, et la formation d'une nomenclature à partir de ces nombres sont réalisées lors de l'installation de la base de données relationnelle.

Le codage des données en nombres a pour autre effet avantageux de compacter les données de la base. Ainsi par rapport aux solutions de type RDBMS qui manipulent le contenu en clair de chaque champ, le procédé selon l'invention n'agit que sur un nombre représentatif de ce champ.

La table ainsi compactée peut être en général contenue en mémoire (pas d'entrée-sortie disque), ou bien peut être chargée en mémoire par colonne ce qui ne représente que des volumes réduits d'entrées/sorties.

Enfin l'invention offre la possibilité d'adapter le codage au type de requêtes qui seront servies. Elle permet en outre la mise en oeuvre d'une optimisation efficace du traitement.

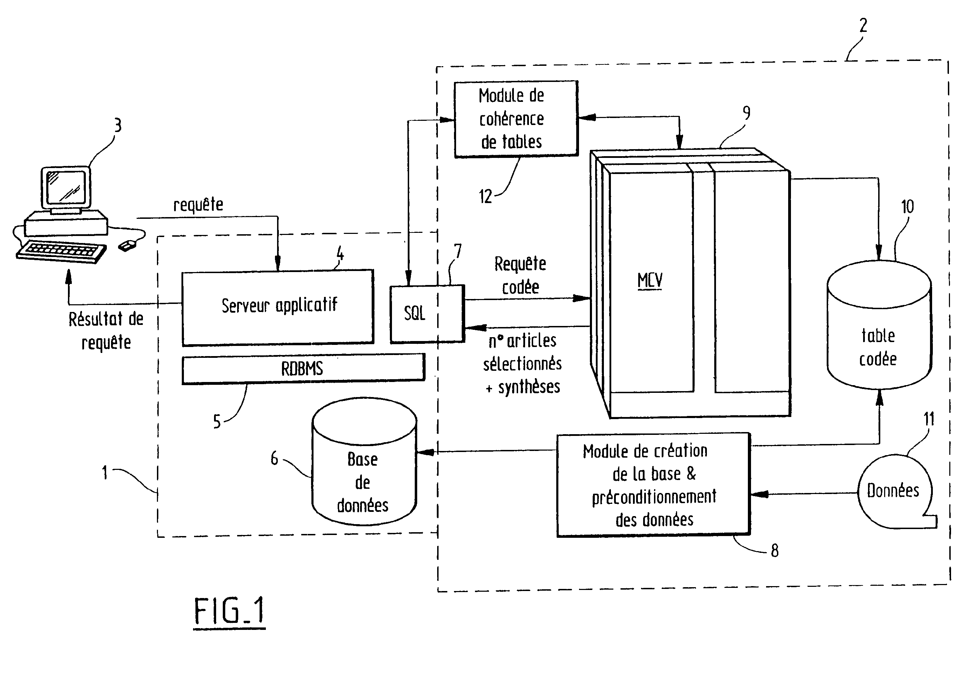

La figure 1 illustre un schéma de principe d'un système de recherche mettant en oeuvre un moteur de recherche selon l'invention.

Le système de recherche comporte, à gauche de la figure, un système applicatif décisionnel 1, représentatif du cas général, délimité par une ligne fermée discontinue, et le moteur de recherche 2, à droite de la figure, délimité par une ligne fermée discontinue.

Le système applicatif décisionnel 1 est couplé à un poste utilisateur (ou client) 3.

Le serveur applicatif décisionnel 1 comporte un serveur applicatif 4 générant des requêtes prédéfinies, un RDBMS 5 gérant une base de données 6, et un agent SQL 7 chargé d'analyser les requêtes soumises par le serveur applicatif 4 et, éventuellement, d'extraire les articles cible de la base 6 en s'appuyant sur le RDBMS 5.

L'utilisateur (le client) émet, via le serveur applicatif 4, des requêtes correspondant à des caractéristiques des articles cible répondant à des critères déterminés et reçoit du même serveur 4 le résultat des requêtes sous la forme soit d'une liste d'articles satisfaisant les critères soit de synthèses statistiques, ou les deux.

Le moteur 2 met en oeuvre un module 8 de préconditionnement de la table de données et exploite les ressources d'un supercalculateur 9 pour le traitement d'un copie 10 de la table préconditionnée en vue d'en extraire les articles cible. Le module 8 de préconditionnement de la table de données reçoit les données importées par exemple d'une banque de données 11. Ces données sont organisées sous forme d'un tableau et codées numériquement selon un format directement exploitable par le supercalculateur 9 et exécutable de façon optimale par les requêtes.

Une copie de cette table est accessible par le supercalculateur 9. Elle réside, par exemple, dans l'espace mémoire du supercalculateur 9 et peut être partionnée si sa taille dépasse celle de la mémoire disponible.

Le supercalculateur 9 reçoit de l'agent SQL 7 la traduction des requêtes soumises par le serveur applicatif 4 sous forme d'un fichier d'entrée.

Le supercalculateur 9 traite ensuite ce fichier d'entrée selon un programme de recherche déterminé tirant le parti maximum de la puissance des pipelines du supercalculateur 9 en travaillant sur les colonnes de la copie 10 de la table.

A l'issue du traitement, il délivre en sortie sous forme d'un fichier, les résultats du traitement effectué correspondant à la liste des numéros de ligne des articles sélectionnés par la recherche et, éventuellement, aux synthèses statistiques demandées sur les articles trouvés.

Si les articles en clair sont demandés, l'agent SQL 7 exploite le fichier résultat pour extraire les articles sélectionnés en clair, à partir de la base de données relationnelle 6.

L'agent SQL 7 transmet ensuite les résultats (articles sélectionnés et/ou synthèses statistiques) sous forme de réponse SQL au serveur applicatif 4 émetteur de la requête.

Un module 12 de cohérence de tables, accessible à l'agent SQL 7, contient la liste des identifiants des tables présentes et la nomenclature des prédicats pour chacune d'entre elles.

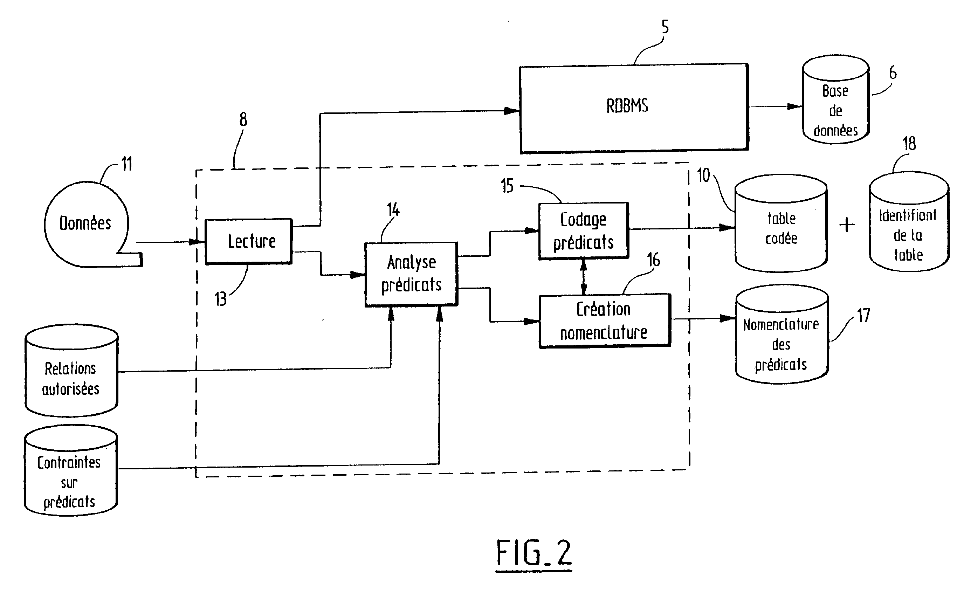

La figure 2 illustre un schéma de principe du module 8 de préconditionnement et d'installation de la table, selon l'invention, délimité par une ligne fermée discontinue.

Il comporte des premiers moyens 13 de lecture des données importées sur un support quelconque, article par article, à l'entrée du module, et provenant par exemple d'une banque de données 11.

Les articles lus sont ensuite, d'une part, complétés de leur numéro et transmis au système de gestion de base de données relationnelle 5 qui crée la base de données en clair 6 dans le serveur applicatif décisionnel 1.

Il comporte, d'autre part, des deuxièmes moyens 14 qui analysent les prédicats sur les articles en fonction de relations autorisées et de contraintes sur les prédicats.

On donne ci-après deux exemples de contraintes sur les prédicats :

Dans un premier exemple, une colonne de la base de données ne comporte que des valeurs numériques. Dans cet exemple, il n'est pas nécessaire de coder numériquement ce qui est déjà numérique.

Dans un deuxième exemple, une colonne de la base de données ne contient que des mots pour lesquels l'ordre alphabétique sera utilisé dans les recherches. Dans cet exemple, l'analyse du prédicat tiendra compte de cette relation pour le codage numérique du prédicat (préservation de l'ordre).

Des troisièmes moyens 15 codent les valeurs des prédicat issus des deuxièmes moyens 14. Ce codage consiste à remplacer les valeurs des champs par leurs index dans la nomenclature des valeurs possibles.

Des quatrièmes moyens 16 créent une nomenclature des prédicats issus des deuxièmes moyens 14 en fonction du type de codage par les troisièmes moyens 15.

Le module de préconditionnement 8 fournit d'autre part l'identifiant de la base codée.

La table codée, la nomenclature des prédicats et l'identifiant de la base se présentent sous la forme de fichiers, respectivement référencés 10, 17 et 18 sur la figure.

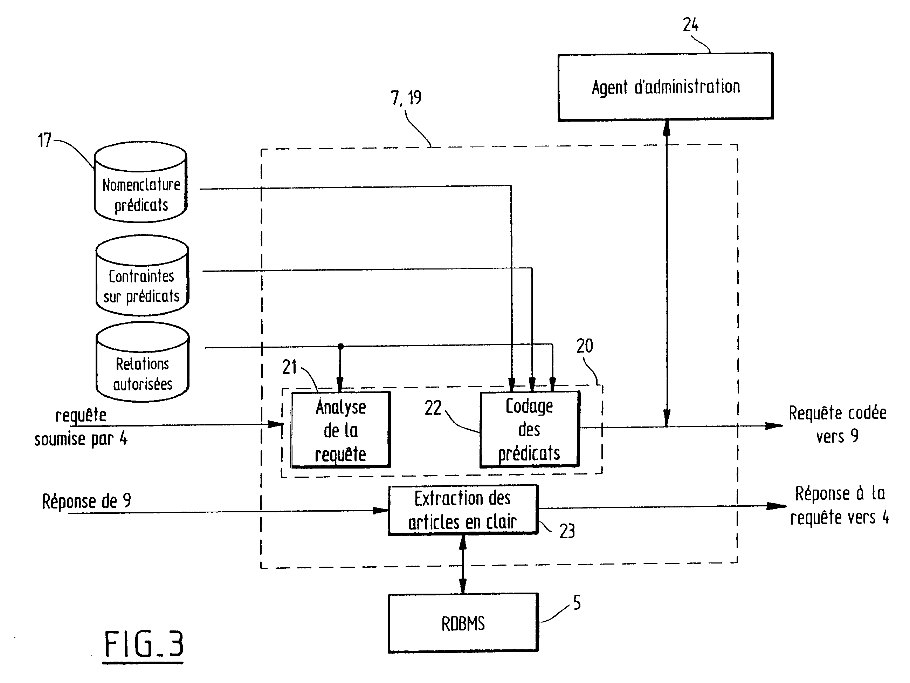

La figure 3 illustre un schéma de principe d'un agent SELECT 19 selon l'invention. Il se substitue à l'agent SQL 7 du serveur applicatif décisionnel 1 qui l'héberge.

Il comporte des moyens 20 de transformation des requêtes, délimités par une ligne fermée en pointillés, lesquelles requêtes sont soumises par le serveur applicatif 4 en fonction de la nomenclature des prédicats 17, des contraintes sur les prédicats et des relations autorisées.

Les moyens 20 de transformation comportent des moyens 21 d'analyse de la requête SELECT et des moyens 22 de codage des prédicats.

Les moyens 21 d'analyse de la requête traduisent la requête en un ensemble de vecteurs représentatifs des champs à trouver et des relations mises en oeuvre en tenant compte des relations autorisées.

Les vecteurs sont ensuite codés par les moyens de codage des prédicats en fonction de la nomenclature des prédicats, des contraintes sur les prédicats et des relations autorisées.

Il y a autant de vecteurs que de valeurs possibles dans les champs de la table. L'analyse permet de construire, par ailleurs, pour chacun de ces vecteurs un vecteur définissant quel type de comparaison effectuer pour chacune des valeurs de champ.

Les vecteurs sont agencés sous forme d'un fichier d'entrée exploitable par le supercalculateur 9.

Un programme de recherche intégré au supercalculateur exécute les comparaisons entre les vecteurs et toutes les lignes du tableau.

Ces comparaisons sont effectuées colonne par colonne.

En cas de coïncidence d'une ligne, son numéro est conservé et la réponse fournie par le supercalculateur à l'agent SQL 7 se présente sous la forme d'un fichier résultat comportant la liste des numéros correspondant aux lignes sélectionnées. C'est à partir de ce fichier que les synthèses statistiques demandées sont calculées.

Un module d'extraction 23 construit ensuite, si elle est demandée, la réponse en clair destinée au serveur applicatif 4 émetteur de la requête, en extrayant de la base de données relationnelle 6, les articles correspondant à la liste des numéros de lignes du fichier résultat du supercalculateur 9 en utilisant le numéro d'article ajouté à la base 6.

L'agent SELECT 19 fournit en outre l'identifiant de la table. C'est le module de cohérence de tables 12 qui contrôle l'identité de la table à traiter en cas de pluralité de tables.

Un agent d'administration 24 est en outre couplé à l'agent SELECT 19 et permet de contrôler l'activité du supercalculateur 9 et gérer les anomalies. Il active en outre le chargement du programme de recherche dans le supercalculateur 9.

## Revendications

1. Procédé de pré-conditionnement d'une ou plusieurs premières tables de données d'un serveur applicatif décisionnel (1) dans un système de recherche, les premières tables étant destinées à être traitées par un moteur de recherche (2) répondant à des requêtes de sélection d'articles dans les premières tables de données, émises par le serveur applicatif décisionnel (1), **caractérisé en ce qu'**il comprend :
- Une étape d'analyse (14) de prédicats contenus dans les champs des articles destinés à remplir la ou les dites premières tables de données, les prédicats comprenant des mots, l'analyse des prédicats dans les articles étant réalisée selon les relations autorisées et des contraintes déterminées sur les prédicats; les contraintes sur les prédicats comprenant une relation ordinale entre les mots;
- Une étape de création (16) d'une nomenclature (17) des prédicats à partir de et subséquente à l'analyse des prédicats des articles;
- Une étape de codage (15) numérique des prédicats, à partir de et subséquente à l'analyse des prédicats des articles, conformément à la nomenclature (17), le codage conservant la relation ordinale entre les mots des prédicats;
- **en ce qu'**il consiste à présenter les prédicats codé, sous la forme d'au moins une seconde table (10) de valeurs numériques, cette seconde table étant copiée dans une machine (9) avec des sectorielles opérant le traitement des valeurs numériques sur la deuxième table.

2. Procédé selon la revendication 1, **caractérisé en ce que** le codage consiste à remplacer les valeurs des prédicats par leur index dans la nomenclature des valeurs possibles.

3. Procédé selon la revendication 1, **caractérisé en ce que** le codage compacte les premières tables de données.

4. Procédé de recherche d'articles, dans au moins une première table de données, en réponse à une requête déterminée provenant d'un serveur applicatif, une deuxième table de valeurs numériques codées étant obtenue à partir de la première table par le procédé selon l'une quelconque des revendications 1 à 3, **caractérisé en ce qu'**il comprend :
- une étape de réception d'une requête comprenant des prédicats, comprenant des mots suivant une relation ordinale, destinés à la recherche d'articles dans la première table,
- une étape de transformation de la requête en une requête encodée comprenant des prédicats encodés numériquement,
- une étape de traitement de la requête encodée en liaison avec la seconde table de valeurs numériques.

5. Procédé selon la revendication 4, **caractérisé en ce que** la requête encodée est exprimée par un ou plusieurs vecteurs représentatifs des valeurs recherchées dans un champ, et **en ce que** le traitement consiste à comparer le ou les vecteurs à toutes les lignes du tableau, colonne par colonne, en conservant pour chaque coïncidence le numéro de la ligne.

6. Procédé selon la revendication 5, **caractérisé en ce qu'**il consiste, à partir de l'ensemble des numéros des lignes sélectionnées et de la base de données relationnelle (6) comprenant un champ additionnel contenant le numéro des lignes, à extraire de la base de données relationne (6) les articles recherchés en clair dont les numéros correspondent, en réponse à une requête.

7. Procédé selon les revendications 5 à 6, **caractérisé en ce qu'**il consiste à exprimer les résultats du traitement sous forme statistique dont une synthèse est fournie en réponse à une requête.

8. Procédé selon l'une des revendications 4 à 7, **caractérisé en ce que** la machine à capacités vectorielles (9) est un supercalculateur.

9. Système de recherche mis en oeuvre par un serveur applicatif décisionnel (1) comportant une base de données relationnelle (6) contenant un ensemble d'articles cible, et un moteur de recherche (2) couplé au serveur applicatif décisionnel (1), activé par une requête de sélection d'articles sur des critères déterminés émise par le serveur applicatif décisionnel (1), **caractérisé en ce que** le moteur (2) comporte des moyens (8) de pré-conditionnement des données de la base (6) et d'installation d'une table codée (10), correspondant à la base (6), sur une machine à capacités vectorielles (9), ces moyens (8) comportant :
- des moyens (13) de lecture d'un fichier de données correspondant à la base ;
- des moyens (16) pour constituer une nomenclature (17) des valeurs des champs contenus dans le fichier
- des moyens (15) de codage des champs conformément à la nomenclature (17) en tenant compte de la nature des champs, des relations à mettre en oeuvre sur les prédicats dans la requête et de contraintes sur des prédicats dans les champs, les contraintes comprenant une relation ordinale sur les prédicats, conservée par le codage;
- des moyens (21) d'analyse des requêtes émises par le serveur applicatif décisionnel (1), en tenant compte de relations autorisées, des contraintes sur les prédicats et de la nomenclature (17); et
- des moyens (22) de codage de la requête analysée, en un ensemble de vecteurs contenant les valeurs à trouver dans les champs selon les relations associées, sous forme d'un fichier d'entrée exploitable par la machine à capacités vectorielles (9).

10. Système selon la revendication 9, **caractérisé en ce qu'**il comporte en outre des moyens (23) pour extraire en clair les données recherchées dans le fichier résultat obtenu en sortie de la machine à capacités vectorielles (9) à partir de moyens de recherche installés dans le serveur applicatif décisionnel (1).

11. Système selon la revendication 9 ou 10, **caractérisé en ce qu'**il comporte en outre, un agent d'administration (24) surveillant l'activité de la machine à capacités vectorielles, gérant les anomalies, et activant les moyens de recherche sur la machine à capacités vectorielles (9).

## Claims

1. Method of preconditioning one or more first data tables of a decision application server (1) in a search system, the first tables being intended to be processed by a search engine (2) responding to queries for selecting records from the first data tables, sent by the decision application server (1), **characterised in that** it comprises:
- A step of analysing (14) predicates contained in the fields of the records intended to fill said first data table(s), the predicates comprising words, the predicates in the records being analysed according to the authorised relations and the predetermined constraints on the predicates, the constraints on the predicates comprising an ordinal relationship between the words;
- A step of creating (16) a nomenclature (17) of the predicates starting from and subsequent to the analysis of the predicates of the records;
- A step of numerically coding (15) the predicates, starting from and subsequent to the analysis of the predicates of the records, in accordance with the nomenclature (17), the coding preserving the ordinal relationship between the words of the predicates;
- **in that** it consists in presenting the coded predicates, in the form of at least one second table (10) of numerical values, this second table being copied to a machine (9) with vectorial capabilities operating the processing of the numerical values in the second table.

2. Method according to Claim 1, **characterised in that** the coding consists in replacing the values of the predicates by their index in the nomenclature of possible values.

3. Method according to Claim 1, **characterised in that** the coding compacts the first data tables.

4. Method of searching for records, in at least one first data table, in response to a predetermined query coming from an application server, a second table of coded numerical values being obtained from the first table by the method according to any one of Claims 1 to 3, **characterised in that** it comprises:
- a step of receiving a query comprising predicates, comprising words in an ordinal relationship, intended for searching for records in the first table,
- a step of transforming the query into a encoded query comprising numerically encoded predicates,
- a step of processing the encoded query in connection with the second table of numerical values.

5. Method according to Claim 4, **characterised in that** the encoded query is expressed by one or more vectors representing the values searched for in a field, and **in that** processing consists in comparing the vector(s) with all the lines of the table, column by column, preserving the line number for each coincidence.

6. Method according to Claim 5, **characterised in that**, starting from all the numbers of the selected lines and the relational data base (6) comprising an additional field containing the line numbers, it consists in extracting from the relational data base (6) the records searched for in plain text with corresponding numbers, in response to a query.

7. Method according to Claims 5 to 6, **characterised in that** it consists in expressing the results of processing in statistical form, a summary of which is provided in response to a query.

8. Method according to one of Claims 4 to 7, **characterised in that** the machine with vectorial capabilities (9) is a supercomputer.

9. Search system implemented by a decision application server (1) including a relational data base (6) containing a set of target records, and a search engine (2) coupled to the decision application server (1), activated by a record selection query on predetermined criteria sent by the decision application server (1), **characterised in that** the engine (2) includes means (8) for preconditioning the data of the base (6) and for installing a coded table (10), corresponding to the base (6), on a machine with vectorial capabilities (9), these means (8) including:
- means (13) for reading a data file corresponding to the base;
- means (16) for constituting a nomenclature (17) of the values of the fields contained in the file;
- means (15) for coding the fields in accordance with the nomenclature (17) while taking account of the nature of the fields, the relations to be implemented on the predicates in the query and constraints on predicates in the fields, the constraints comprising an ordinal relationship on the predicates, preserved by coding;
- means (21) for analysing the queries sent by the decision application server (1), while taking account of authorised relations, the constraints on the predicates and the nomenclature (17); and
- means (22) for coding the analysed query, in a set of vectors containing the values to be found in the fields according to the associated relations, in the form of an input file that can be used by the machine with vectorial capabilities (9).

10. System according to Claim 9, **characterised in that** it also includes means (23) for extracting in plain text the data searched for in the result file obtained as an output from the machine with vectorial capabilities (9) on the basis of search means installed in the decision application server (1).

11. System according to Claim 9 or 10, **characterised in that** it also includes a management agent (24) monitoring the activity of the machine with vectorial capabilities, managing the anomalies, and activating the search means on the machine with vectorial capabilities (9).

## Patentansprüche

1. Verfahren zur Vorverarbeitung einer oder mehrerer erster Datentabellen eines Entscheidungs-Anwendungsservers (1) in einem Suchsystem, wobei die ersten Tabellen dazu bestimmt sind, durch eine Suchmaschine (2) verarbeitet zu werden, die auf Anforderungen zur Auswahl von Artikeln in den ersten Datentabellen antwortet, die von dem Entscheidungs-Anwendungsserver (1) gesendet werden, **dadurch gekennzeichnet, dass** es umfasst:
- einen Schritt (14) des Analysierens von Prädikaten, die in den Feldern der Artikel enthalten sind und dazu vorgesehen sind, die erste(n) Datentabelle(n) zu ausfüllen, wobei die Prädikate Wörter enthalten, wobei die Analyse der Prädikate in den Artikeln gemäß autorisierten Beziehungen und bestimmten Beschränkungen für die Prädikate ausgeführt wird, wobei die Beschränkungen für die Prädikate eine Ordnungsbeziehung zwischen den Wörtern enthalten;
- einen Schritt (16) des Erzeugens einer Nomenklatur (17) der Prädikate anhand der und anschließend an die Analyse der Prädikate der Artikel; und
- einen Schritt (15) des digitalen Codierens der Prädikate anhand der und anschließend an die Analyse der Prädikate der Artikel gemäß der Nomenklatur (17), wobei die Codierung die Ordnungsbeziehung zwischen den Wörtern der Prädikate beibehält;
- und dass es darin besteht, die codierten Prädikate in der Form wenigstens einer zweiten Tabelle (10) aus digitalen Werten zu präsentieren, wobei diese zweite Tabelle in eine Maschine (9) mit vektoriellen Kapazitäten kopiert wird, die die Verarbeitung der digitalen Werte in der zweiten Tabelle ausführt.

2. Verfahren nach Anspruch 1, **dadurch gekennzeichnet, dass** die Codierung darin besteht, die Werte der Prädikate durch ihren jeweiligen Index in der Nomenklatur möglicher Werte zu ersetzen.

3. Verfahren nach Anspruch 1, **dadurch gekennzeichnet, dass** die Codierung die ersten Datentabellen komprimiert.

4. Verfahren zum Suchen von Artikeln in wenigstens einer ersten Datentabelle in Reaktion auf eine bestimmte Anforderung, die von einem Anwendungsserver stammt, wobei eine zweite Tabelle codierter digitaler Werte anhand der ersten Tabelle durch das Verfahren nach einem der Ansprüche 1 bis 3 erhalten wird, **dadurch gekennzeichnet, dass** es umfasst:
- einen Schritt des Empfangens einer Anforderung, die Prädikate enthält, die Wörter gemäß einer Ordnungsbeziehung enthalten, die für die Suche von Artikeln in der ersten Tabelle bestimmt sind,
- einen Schritt des Transformierens der Anforderung in eine codierte Anforderung, die digital codierte Prädikate enthält,
- einen Schritt des Verarbeitens der codierten Anforderung in Verbindung mit der zweiten Tabelle digitaler Werte.

5. Verfahren nach Anspruch 4, **dadurch gekennzeichnet, dass** die codierte Anforderung durch einen oder mehrere Vektoren ausgedrückt wird, die gesuchte Werte in einem Feld repräsentieren, und dass die Verarbeitung darin besteht, den oder die Vektoren mit allen Zeilen der Tabelle Spalte für Spalte zu vergleichen, wobei für jede Übereinstimmung die Nummer der Zeile beibehalten wird.

6. Verfahren nach Anspruch 5, **dadurch gekennzeichnet, dass** es darin besteht, anhand der Gesamtheit der Nummern der ausgewählten Zeilen und der relationalen Datenbank (6), die ein zusätzliches Feld umfasst, das die Nummer der Zeilen enthält, aus der relationalen Datenbank (6) die in Klarschrift gesuchten Artikel, deren Nummern jenen Nummern entsprechen, in Reaktion auf eine Anforderung zu extrahieren.

7. Verfahren nach den Ansprüchen 5 bis 6, **dadurch gekennzeichnet, dass** es darin besteht, die Ergebnisse der Verarbeitung in statistischer Form, wovon eine Synthese in Reaktion auf eine Anforderung geliefert wird, auszudrücken.

8. Verfahren nach einem der Ansprüche 4 bis 7, **dadurch gekennzeichnet, dass** die Maschine (9) mit vektoriellen Kapazitäten ein Hochleistungsrechner ist.

9. Suchsystem, das von einem Entscheidungs-Anwendungsserver (1) betrieben wird, mit einer relationalen Datenbank (6), die eine Gesamtheit von Zielartikeln enthält, und einer Suchmaschine (2), die mit dem Entscheidungs-Anwendungsserver gekoppelt ist und durch eine Anforderung zur Auswahl von Artikeln anhand bestimmter Kriterien, die von dem Entscheidungs-Anwendungsserver (1) gesendet werden, aktiviert wird, **dadurch gekennzeichnet, dass** die Maschine (2) Mittel (8) zum Vorverarbeiten von Daten der Bank (6) und zur Installation einer codierten Tabelle (10), die der Bank (6) entspricht, in einer Maschine (9) mit vektoriellen Kapazitäten umfasst, wobei diese Mittel (8) umfassen:
- Mittel (13) zum Lesen einer Datendatei, die der Basis entspricht;
- Mittel (16) zum Bilden einer Nomenklatur (17) von Werten der in der Datei enthaltenen Felder,
- Mittel (15) zum Codieren der Felder gemäß der Nomenklatur (17) unter Berücksichtigung der Art der Felder, der Relationen, die an den Prädikaten in der Anforderung ausgebildet werden sollen, und von Beschränkungen für die Prädikate in den Feldern, wobei die Beschränkungen eine Ordnungsbeziehung für die Prädikate umfassen, die durch die Codierung beibehalten wird;
- Mittel (21) zum Analysieren von durch den Entscheidungs-Anwendungsserver (1) gesendeten Anforderungen unter Berücksichtigung autorisierter Beziehungen, der Beschränkungen für die Prädikate und der Nomenklatur (17); und
- Mittel (22) zum Codieren der analysierten Anforderung in eine Gesamtheit von Vektoren, die die in den Feldern aufzufindenden Werte enthalten, gemäß zugeordneten Beziehungen in Form einer Eingangsdatei, die durch die Maschine (9) mit vektoriellen Kapazitäten auswertbar ist.

10. System nach Anspruch 9, **dadurch gekennzeichnet, dass** es außerdem Mittel (23) umfasst, um die Daten, die in der Ergebnisdatei gesucht werden, die am Ausgang der Maschine (9) mit vektoriellen Kapazitäten erhalten wird, anhand von Suchmitteln, die im Entscheidungs-Anwendungsserver (1) installiert sind, in Klarschrift zu extrahieren.

11. System nach Anspruch 9 oder 10, **dadurch gekennzeichnet, dass** es außerdem ein Administrationsmittel (24) umfasst, das die Aktivität der Maschine mit vektoriellen Kapazitäten überwacht, Anomalien verwaltet und die Suchmittel in der Maschine (9) mit vektoriellen Kapazitäten aktiviert.
